# EUROPÄISCHE PATENTSCHRIFT

(11) **EP 4 211 362 B1**
(45) Veröffentlichungstag und Bekanntmachung des Hinweises auf die Patenterteilung: **23.10.2024**
(21) Anmeldenummer: 21773040.7
(22) Anmeldetag: 01.09.2021
(51) Int. Cl.: F16D 23/12, F16D 13/26

(54) **KUPPLUNG, ANORDNUNG MIT EINER DERARTIGEN KUPPLUNG UND FAHRZEUG MIT EINER DERARTIGEN KUPPLUNG**
CLUTCH, ARRANGEMENT WITH A CLUTCH OF THIS TYPE, AND VEHICLE WITH A CLUTCH OF THIS TYPE
EMBRAYAGE, AGENCEMENT AVEC EMBRAYAGE DE CE TYPE ET VÉHICULE ÉQUIPÉ D'UN EMBRAYAGE DE CE TYPE

(30) Priorität: 12.09.2020 DE 102020005586
(43) Veröffentlichungstag der Anmeldung: 19.07.2023
(73) Patentinhaber: Diehl Metall Stiftung & Co. KG, 90552 Röthenbach (DE)
(72) Erfinder: SKUBACZ, Tobias, 90571 Schwaig (DE)
(74) Vertreter: Diehl Patentabteilung
(86) Internationale Anmeldenummer: PCT/EP2021/074177
(87) Internationale Veröffentlichungsnummer: WO 2022/053375

(56) Entgegenhaltungen:
- EP-A1- 3 633 221
- CN-Y- 201 326 663
- DE-C- 686 284

## Beschreibung

Die Erfindung betrifft eine Kupplung zum wahlweisen Verbinden einer ersten Welle mit einer zweiten Welle mit den Merkmalen des Oberbegriffs des Anspruchs 1.

Für bestimmte Anwendungen ist es wünschenswert, dass ein oder mehrere Antriebe, bei denen es sich jeweils um eine elektrische Maschine oder einen Verbrennungsmotor handeln kann, mittels der Kupplung kraftschlüssig mit einem anderen Antrieb oder einem Aggregat verbunden werden können. Wenn der Kraftschluss hergestellt ist, d. h. wenn die Kupplung geschlossen ist, kann ein Drehmoment übertragen werden. Die Kupplung kann auch in einen geöffneten Zustand gebracht werden, in dem die kraftschlüssige Verbindung getrennt ist. Derartige Kupplungen sind bereits bekannt.

In der EP 3 633 221 A1 wird eine gattungsgemäße Kupplung beschrieben, die in einem Kraftfahrzeug verwendet werden kann, das sowohl einen Verbrennungsmotor als auch einen elektrischen Antriebsmotor aufweist. Mittels der Kupplung kann ein Drehmoment selektiv zwischen einer Eingangswelle und einer Ausgangswelle übertragen werden. Der Verbrennungsmotor ist mit der Eingangswelle und der elektrische Antriebsmotor ist mit der Ausgangswelle verbunden. Die Kupplung umfasst eine Klauenkupplung und eine Reibungskupplung.

Bei Kraftfahrzeugen werden zu diesem Zweck beispielsweise Tellerfederkupplungen zwischen Motor und Getriebe eingesetzt. Derartige herkömmliche Kupplungen weisen allerdings den Nachteil auf, dass permanent eine Kraft aufgebracht werden muss, entweder um die Kupplung in dem geöffneten Zustand oder in dem geschlossenen Zustand zu halten. Die Energiebilanz beim Betrieb der Kupplung ist daher nicht zufriedenstellend.

Der Erfindung liegt daher die Aufgabe zugrunde, eine Kupplung anzugeben, deren Betrieb weniger Energie erfordert.

Diese Aufgabe wird durch eine Kupplung mit den Merkmalen des Anspruchs 1 gelöst.

Die erfindungsgemäße Kupplung ist zum wahlweisen Verbinden einer ersten Welle mit einer zweiten Welle ausgebildet, wobei die Kupplung dazu ausgebildet ist, ohne Aufbringen einer äußeren Kraft entweder einen geschlossenen Zustand, in dem eine kraftschlüssige Verbindung zwischen den beiden Wellen hergestellt ist, als auch einen geöffneten Zustand, in dem die beiden Wellen voneinander getrennt sind, aufrechtzuerhalten, wobei die Kupplung mittels eines Aktors von dem geschlossenen Zustand in den geöffneten Zustand und umgekehrt schaltbar ist, wobei die Kupplung ein Druckstück aufweist, das mittels des Aktors entlang einer Laufbahn bewegbar ist und auf ein drehfest mit der ersten Welle verbundenes und axial verschiebbares Druckelement eine Kraft ausübt, sodass das Druckelement entweder in dem geschlossenen Zustand gegen ein mit der zweiten Welle verbundenes Reibelement angedrückt wird oder in dem geöffneten Zustand der Kupplung von dem Reibelement beabstandet ist.

Die Erfindung weist den Vorteil auf, dass lediglich zum Schalten zwischen den beiden Zuständen der Kupplung Energie aufgewendet werden muss. Zum Halten des jeweiligen Zustands, d. h. zum Halten des geschlossenen Zustands oder des geöffneten Zustands, ist jedoch keine Energie erforderlich. Die erfindungsgemäße Kupplung zeichnet sich somit durch einen besonders geringen Energiebedarf aus.

Bei der erfindungsgemäßen Kupplung drückt das Druckstück im geschlossenen Zustand über das Druckelement, das mit der ersten Welle verbunden ist, ein mit der zweiten Welle verbundenes Reibelement an. Das Reibelement ist mit der zweiten Welle drehfest verbunden und relativ zu der zweiten Welle axial verschiebbar. Beim Schließen der Kupplung werden das mit der zweiten Welle verbundene Reibelement und ein mit der ersten Welle verbundenes festes Reibelement zusammengedrückt. In diesem geschlossenen Zustand sind die beiden Wellen kraftschlüssig miteinander verbunden, sodass ein Drehmoment übertragen werden kann. Durch Bewegen des Druckstücks entlang der Laufbahn kann die Kupplung aus dem geschlossenen Zustand in den geöffneten Zustand überführt werden. Ebenso kann die Kupplung durch Umkehren der Bewegungsrichtung des Druckstücks aus einem geöffneten Zustand in den geschlossenen Zustand überführt werden. Die Laufbahn für das Druckstück ist so ausgebildet, dass die von dem Druckstück ausgeübte Kraft im geschlossenen Zustand das Druckelement gegen das Reibelement andrückt. In dem geöffneten Zustand wechselt die von dem Druckstück ausgeübte Kraft die Richtung und drückt das Druckelement von dem Reibelement weg, wodurch der Kraftfluss zwischen der ersten Welle und der zweiten Welle unterbrochen wird. Durch die Form der Laufbahn wird sowohl in dem geschlossenen Zustand als auch in dem geöffneten Zustand eine Selbsthaltung erreicht. Bei der erfindungsgemäßen Kupplung muss nur zum Schalten Energie aufgewendet werden, im geöffneten und im geschlossenen Zustand jedoch nicht.

Bei der erfindungsgemäßen Kupplung ist der Aktor zum Verschieben einer ersten Getriebekomponente ausgebildet, die derart mit einer zweiten Getriebekomponente gekoppelt ist, dass durch Verschieben der ersten Getriebekomponente das Druckstück durch die zweite Getriebekomponente entlang der Laufbahn bewegbar ist, um die Kupplung von dem geschlossenen Zustand in den geöffneten Zustand und umgekehrt zu schalten. Dementsprechend führt der Aktor eine lineare Bewegung durch. Der Aktor kann als Spindeltrieb, Schaltstange, Schaltgabel, Pneumatikzylinder, Hydraulikzylinder, Magnetspule oder Direktantrieb ausgebildet sein. Es ist alternativ auch möglich, dass sich der Aktor auf der rotierenden Welle befindet.

Eine Variante der Erfindung sieht vor, dass die erste Getriebekomponente als Zahnstange und die zweite Getriebekomponente als Zahnrad oder Zahnradsegment ausgebildet ist. Diese Komponenten ermöglichen die Umwandlung einer linearen Bewegung in eine Drehbewegung. Dementsprechend kann der Aktor die Kupplung durch eine lineare Bewegung schalten, die mittels der zweiten Getriebekomponente in eine Drehbewegung umgewandelt wird.

Alternativ kann die erste Getriebekomponente auch als Schubgelenk und die zweite Getriebekomponente als Kurbel ausgebildet sein. Das Schubgelenk wird durch den Aktor angetrieben und linear verschoben, wodurch die Kurbel eine Drehbewegung durchführt.

Gemäß einer weiteren Alternative können die erste Getriebekomponente und die zweite Getriebekomponente als Bestandteile eines Koppelgetriebes ausgebildet sein. Dabei wird ein Koppelgelenk einer Komponente des Koppelgetriebes linear verschoben, wodurch eine weitere Komponente des Koppelgetriebes in Rotation versetzt wird.

Im Rahmen der Erfindung wird es besonders bevorzugt, dass das Druckstück durch die Kraft eines Federelements beaufschlagt ist, das zwischen der zweiten Getriebekomponente und dem Druckstück angeordnet ist und bei geschlossener Kupplung das Druckelement gegen ein mit der zweiten Welle verbundenes Bauteil anpresst. Das Federelement stellt sicher, dass stets eine bestimmte Anpresskraft auf das Druckstück ausgeübt wird. Dadurch wird durch die Geometrie der Laufbahn sowohl bei geschlossener Kupplung als auch bei geöffneter Kupplung die Position des Druckelements festgelegt, das sich somit immer in einem definierten Zustand befindet. Das Federelement kann zum Beispiel als Schraubendruckfeder oder alternativ als Tellerfeder, Tellerfederanordnung oder Tellerfederpaket ausgebildet sein. Im geöffneten Zustand der Kupplung stellt das Federelement sicher, dass ein Lüftspiel vorhanden ist. Wenn das Druckstück durch den Aktor entlang der Laufbahn bewegt wird, ändert sich die Richtung der von dem Federelement ausgeübten Druckkraft. Dadurch kann auch die Richtung, in die das Druckelement gedrückt wird, geändert werden.

Eine Weiterbildung der Erfindung sieht vor, dass die Laufbahn des Druckstücks als konkaves Kreissegment ausgebildet ist. Sie kann auch als Kombination mehrerer Kreissegmente ausgebildet sein oder wie eine Außenfläche eines Torussegments geformt sein. Die Laufbahn muss allerdings nicht notwendigerweise kreissegmentförmig oder torussegmentförmig ausgebildet sein. Alternativ kann die Laufbahn im Profilquerschnitt auch als konkave Rinne oder z. B. als rechteckige Rinne ausgebildet sein. Die Laufbahn kann auch in Längsrichtung aus zwei oder mehr Segmenten zusammengesetzt sein. Der bei einem Schaltvorgang von dem Druckstück während der Drehbewegung zurückgelegte Weg kann beispielsweise etwa 90° bis 120° betragen. Das durch das Federelement beaufschlagte Druckstück kann als Kugel, als Zylinder oder als Zylinder mit einem Ende, das kugelförmig, als Torus, als Torussegment, als Hohlzylindersegment oder als Zylinderabschnitt ausgebildet sein.

Ein als Kugel oder Zylinder ausgebildetes Druckstück rutscht oder wälzt sich auf der Laufbahn ab, in Abhängigkeit der Art der Aufbringung der Druckkraft. Die Reibung ist besonders gering, wenn das Druckstück als Zylinder (Rolle) ausgebildet ist und sich entlang der Laufbahn abwälzen kann. Wenn die Reibung klein ist, verringert sich in vorteilhafter Weise auch die Betätigungskraft.

Um ein höheres Drehmoment zu übertragen, kann die erfindungsgemäße Kupplung mehrere Reibflächen besitzen, insbesondere zwei, drei oder vier Reibflächen.

Vorzugsweise sind die mehreren Reibflächen parallel zueinander angeordnet. Durch das Vorsehen mehrerer Reibflächen können die Außenabmessungen der Kupplung klein gehalten werden und das übertragbare Moment der Kupplung kann erhöht werden. Die mehreren Reibflächen können auch zu zwei Gruppen oder Stapeln zusammengefasst sein, die an beiden Seiten des Druckelements angeordnet sind.

Bei der erfindungsgemäßen Kupplung kann eine Reibfläche als Scheibe, als Ring oder als Konus ausgebildet sein. Bei einer als Konus ausgebildeten Reibfläche ergibt sich eine dem Konuswinkel entsprechende Verstärkung der Flächenpressung. Somit kann im Vergleich zu einer als Scheibe ausgebildeten Reibfläche bei gleicher Anpresskraft ein höheres Drehmoment übertragen werden.

Es kann auch vorgesehen sein, dass die Kupplung wenigstens eine Lüftfeder zum Erzeugen eines Lüftspiels in dem geöffneten Zustand aufweist. Die Lüftfeder stellt sicher, dass die Reibfläche bei geöffneter Kupplung von der entsprechenden Gegenfläche beabstandet ist, wodurch ein Schleppmoment und somit Reibungsverluste vermieden werden.

Die erfindungsgemäße Kupplung kann auch mehrere über den Umfang verteilt angeordnete Druckstücke aufweisen, die gemeinsam mittels des Aktors entlang einer Laufbahn bewegbar sind und ein fest mit der ersten Welle verbundenes Druckelement beaufschlagen.

Daneben betrifft die Erfindung eine Anordnung, umfassend eine erste Welle und eine zweite Welle und eine dazwischen angeordnete Kupplung der beschriebenen Art. Beide Wellen können jeweils Bestandteil einer elektrischen Maschine sein, insbesondere eines Elektromotors. Alternativ kann eine Welle Bestandteil einer elektrischen Maschine, insbesondere eines Elektromotors, und die andere Welle Bestandteil eines anderen Aggregats sein. Beispiele dafür sind ein Getriebe oder eine Brennkraftmaschine.

Daneben betrifft die Erfindung ein Fahrzeug, insbesondere ein Elektrofahrzeug oder ein Hybridfahrzeug, umfassend zwei elektrische Maschinen, die entweder als Motor oder als Generator betreibbar sind, wobei das Fahrzeug eine Anordnung, umfassend eine erste Welle und eine zweite Welle und eine dazwischen angeordnete Kupplung der beschriebenen Art aufweist. Die Erfindung umfasst auch ein Fahrzeug, mit einer Brennkraftmaschine und einer Kupplung der beschriebenen Art. Optional kann zusätzlich wenigstens eine elektrische Maschine vorhanden sein, die mit der Kupplung verbunden ist.

Die Erfindung wird nachfolgend anhand von Ausführungsbeispielen unter Bezugnahme auf die Zeichnungen erläutert. Die Zeichnungen sind schematische Darstellungen und zeigen:
- Fig. 1: ein erstes Ausführungsbeispiel einer erfindungsgemäßen Kupplung im geschlossenen Zustand;
- Fig. 2: die in Fig. 1 gezeigte Kupplung im geöffneten Zustand;
- Fig. 3: ein zweites Ausführungsbeispiel einer erfindungsgemäßen Kupplung im geschlossenen Zustand;
- Fig. 4: die in Fig. 3 gezeigte Kupplung im geöffneten Zustand;
- Fig. 5: ein drittes Ausführungsbeispiel einer erfindungsgemäßen Kupplung im geschlossenen Zustand;
- Fig. 6: die in Fig. 5 gezeigte Kupplung im geöffneten Zustand;
- Fig. 7: ein viertes Ausführungsbeispiel einer erfindungsgemäßen Kupplung im geschlossenen Zustand;
- Fig. 8: die in Fig. 7 gezeigte Kupplung im geöffneten Zustand;
- Fig. 9: ein Detail der Kupplung im Bereich des Druckelements und des Zahnrads;
- Fig. 10: eine alternative Ausführung zu dem in Fig. 9 gezeigten Beispiel;
- Fig. 11: eine weitere alternative Ausführung zu dem in Fig. 9 gezeigten Beispiel;
- Fig. 12: ein Ausführungsbeispiel einer Kupplung mit zwei Reibpaarungen im geschlossenen Zustand;
- Fig. 13: die in Fig. 12 gezeigte Kupplung im geöffneten Zustand;
- Fig. 14: ein Ausführungsbeispiel einer Kupplung mit vier Reibpaarungen im geschlossenen Zustand;
- Fig. 15: die in Fig. 14 gezeigte Kupplung im geöffneten Zustand;
- Fig. 16: ein Ausführungsbeispiel einer Kupplung mit konisch angeordneter Reibpaarung im geschlossenen Zustand;
- Fig. 17: ein ähnliches Ausführungsbeispiel wie in Fig. 16 mit zwei konisch angeordneten Reibpaarungen im geschlossenen Zustand;
- Fig. 18: eine perspektivische Ansicht eines Ausführungsbeispiels einer Kupplung;
- Fig. 19: die in Fig. 18 gezeigte Kupplung ohne Gehäuse in einem Zwischenzustand;
- Fig. 20: eine teilweise geschnittene Ansicht der in Fig. 18 gezeigten Kupplung in einem Zwischenzustand;
- Fig. 21: eine weitere teilweise geschnittene Ansicht der in Fig. 18 gezeigten Kupplung im geschlossenen Zustand;
- Fig. 22: eine weitere teilweise geschnittene Ansicht der in Fig. 19 gezeigten Kupplung im geöffneten Zustand;
- Fig. 23: ein Ausführungsbeispiel einer Kupplung mit zwei Stapeln von Reibpaarungen im geschlossenen Zustand;
- Fig. 24: die in Fig. 23 gezeigte Kupplung im geöffneten Zustand;
- Fig. 25: ein weiteres Ausführungsbeispiel einer Kupplung mit zwei Stapeln von Reibpaarungen im geschlossenen Zustand; und
- Fig. 26: die in Fig. 25 gezeigte Kupplung im geöffneten Zustand.

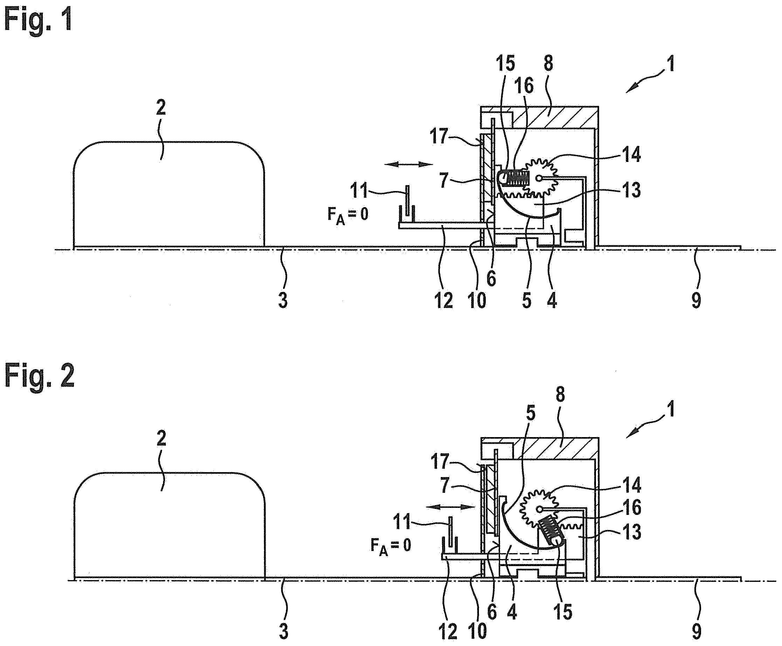

Die Fig. 1 und 2 zeigen ein erstes Ausführungsbeispiel einer Kupplung 1, wobei Fig. 1 die Kupplung im geschlossenen Zustand und Fig. 2 die Kupplung 1 im geöffneten Zustand zeigt. Eine elektrische Maschine 2, die als Elektromotor ausgebildet ist, umfasst eine Welle 3, auf der ein Druckelement 4 drehfest jedoch axial verschiebbar angeordnet ist. Das mit der Welle 3 rotierende Druckelement 4 weist eine Laufbahn 5 auf, die konkav und zumindest näherungsweise kreissegmentförmig ausgebildet ist. Die Laufbahn 5 erstreckt sich etwa über einen Winkelbereich von 120°. An beiden Enden der Laufbahn ist jeweils ein Anschlag vorhanden.

In dem in Fig. 2 gezeigten geöffneten Zustand ist eine Axialfläche 6 des Druckelements 4 von einem beweglichen Reibelement 7 beabstandet. Das bewegliche Reibelement 7 weist einen Reibbelag auf und ist axial verschiebbar jedoch drehfest in einem Gehäuse 8, das fest mit einer zweiten Welle 9 verbunden ist, gelagert.

Ein ortsfestes Reibelement 10 ist fest mit der ersten Welle 3 verbunden. In dem in Fig. 1 gezeigten geschlossenen Zustand drückt das Druckelement 4 mit seiner Axialfläche 6 das den Reibbelag aufweisende Reibelement 7 gegen das feste Reibelement 10, wodurch Reibschluss und Kraftschluss zwischen den beiden Wellen 3, 9 hergestellt wird.

Die in den Fig. 1 und 2 gezeigte Anordnung weist einen schematisch dargestellten Aktor 11 auf, der in diesem Ausführungsbeispiel als Linearantrieb ausgebildet ist. Alternativ kann der Aktor auch als Schiebemuffe oder Schaltmuffe ausgebildet sein, durch die ein Schieber betätigbar ist. Der Linearantrieb umfasst einen Schieber 12, der fest mit einer ersten Getriebekomponente verbunden ist, die als Zahnstange 13 ausgebildet ist. Die Zahnstange 13 ist mit einer zweiten Getriebekomponente im Eingriff, die als Zahnrad 14 ausgebildet ist. An dem Zahnrad 14 ist ein Druckstück 15 federnd gelagert angebracht. Das Druckstück 15 ist in diesem Ausführungsbeispiel als Kugel ausgebildet, die durch eine Schraubendruckfeder 16 beaufschlagt wird. Die Schraubendruckfeder 16 ist in einer radial zum Zahnrad 14 angeordneten Führung aufgenommen. Dementsprechend wird das Druckstück 15 bei einer Drehung des Zahnrads 14 ebenfalls gedreht.

Die Funktion der Kupplung 1 ist wie folgt: In dem in Fig. 1 gezeigten geschlossenen Zustand drückt das Druckstück 15 unter der Wirkung der durch die Schraubendruckfeder 16 erzeugten Druckkraft gegen das Druckelement 4, sodass dieses gegen das mit der zweiten Welle 9 verbundene bewegliche Reibelement 7 gedrückt wird. Mit seiner gegenüberliegenden, in Fig. 1 und 2 linken Fläche 17 drückt das bewegliche Reibelement 7 mit dem Reibbelag gegen das feste Reibelement 10. Um die Kupplung 1 aus dem in Fig. 1 gezeigten geschlossenen Zustand in den in Fig. 2 gezeigten geöffneten Zustand zu bringen, wird der Aktor 11 betätigt, wodurch der Schieber 12 axial verschoben wird, in der Ansicht von Fig. 1 nach rechts. Dadurch wird die mit dem Schieber 12 fest verbundene Zahnstange 13 axial verschoben und das axial feststehende Zahnrad 14 gedreht, in diesem Fall gegen den Uhrzeigersinn. Das an dem Zahnrad 14 federnd gelagerte Druckstück 15 wird mit dem Zahnrad 14 gedreht und bewegt sich dabei entlang der Laufbahn 5 des Druckelements 4.

Nach der Drehung des Zahnrads 14, bei der das Druckstück 15 entlang der Laufbahn 5 bewegt wird und die in Fig. 2 gezeigte Endlage einnimmt, wirkt die von der Schraubendruckfeder 16 erzeugte Druckkraft in die entgegengesetzte Axialrichtung, in der in Fig. 2 gezeigten Ansicht nach rechts, sodass das Druckelement 4 von dem beweglichen Reibelement 7 weg bewegt wird und der Reibschluss zwischen den beiden Wellen 3, 9 aufgehoben ist.

Sowohl der in Fig. 1 gezeigte geschlossene Zustand als auch der in Fig. 2 gezeigte geöffnete Zustand sind jeweils selbsthaltend, d. h. es muss keine Kraft durch den Aktor aufgewendet werden, um den jeweiligen Zustand beizubehalten. Lediglich zum Schalten der Kupplung 1 muss Arbeit verrichtet werden, um den Aktor 11 anzutreiben.

Beim Schalten der Kupplung wird die als Hülse ausgebildete Führung der Schraubendruckfeder 16 geschwenkt, wodurch sich der Druckwinkel und der Druckpunkt der von der Schraubendruckfeder 16 auf die Laufbahn 5 ausgeübten Druckkraft ändern, wobei der axiale Anteil der auf das Druckelement 4 wirkenden Druckkraft verringert wird und schließlich die Richtung wechselt. Dadurch wird das Druckelement 4 axial entlang der ersten Welle 3 verschoben und die Kupplung 1 wird mit dem Lüftspiel geöffnet. Aufgrund der auftretenden Reibung und der Form der Laufbahn 5 wird die gewünschte Selbsthaltung und Bistabilität in beiden Endzuständen erreicht.

Sowohl im geöffneten Zustand als auch im geschlossenen Zustand stützt sich die Schraubendruckfeder 16 beidseitig an mit der ersten Welle 3 verbundenen Komponenten ab. Innerhalb der mit der ersten Welle 3 rotierenden Komponenten ist ein geschlossener Lastpfad gebildet, sodass keine Axialkraft auf die zweite Welle 9 ausgeübt wird. Die von der Schraubendruckfeder 16 verrichtete Federarbeit ist minimal.

Falls eine Überlastung der Kupplung 1 vorliegt, tritt zwischen dem beweglichen Reibelement 7, das mit der zweiten Welle 9 verbunden ist, und dem festen Reibelement 10, das mit der ersten Welle 3 verbunden ist, Schlupf bzw. Gleiten auf. Dementsprechend öffnet die Kupplung 1 bei Überlastung selbsttätig, dabei bleiben die Stellungen des Aktors 11, des Zahnrades 14 sowie des Druckstücks 15 auf der Laufbahn 5 unverändert, so dass sich nach Wegfall der Überlast die Kupplung wiederhin im geschlossenen Zustand befindet. Durch entsprechende Auslegung der Federkennlinie und der Reibbeläge kann der Bereich, bei dem die Kupplung 1 bei einer Überlastung selbsttätig öffnet, festgelegt werden. Durch die selbsttätige Öffnung der Kupplung 1 bei Überlastung wird eine Beschädigung der mit der Kupplung 1 gekoppelten Bauteile, insbesondere eine Beschädigung der wenigstens einen elektrischen Maschine, verhindert und die weiteren Komponenten des Antriebsstrangs werden geschützt.

Das in den Fig. 1 und 2 gezeigte Ausführungsbeispiel zeichnet sich dadurch aus, dass die Betätigungskraft der Kupplung 1 eine im Vergleich zur Kupplungskraft erheblich geringere Betätigungskraft benötigt.

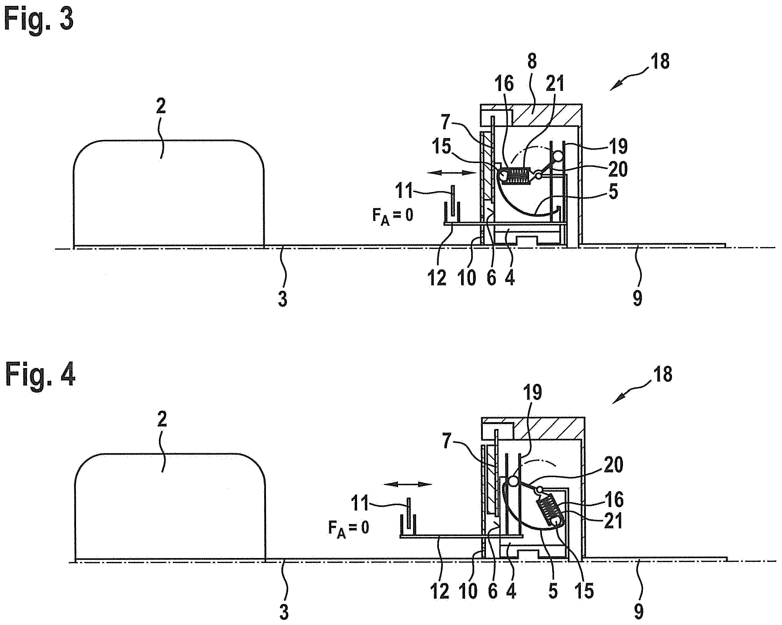

Die Fig. 3 und 4 zeigen ein zweites Ausführungsbeispiel einer Kupplung 18, wobei Fig. 3 den geschlossenen Zustand und Fig. 4 den geöffneten Zustand darstellt. Diejenigen Komponenten, die mit denjenigen des ersten Ausführungsbeispiels übereinstimmen, werden nicht nochmals im Detail erläutert. Für übereinstimmende Komponenten werden dieselben Bezugszeichen verwendet.

In Übereinstimmung mit dem ersten Ausführungsbeispiel umfasst die Kupplung 18 das Druckelement 4, das mit der ersten Welle 3 drehfest, jedoch axial verschiebbar verbunden ist. Das Druckelement 4 weist die als konkaves Kreissegment ausgebildete Laufbahn 5 auf. Eine erste Getriebekomponente ist als Schubgelenk 19 ausgebildet und mit dem Schieber 12, der durch den Aktor 11 betätigbar ist, verbunden. In dem Schubgelenk 19 ist eine als zweite Getriebekomponente ausgebildete Kurbel 20 bewegbar geführt. Bestandteil der Kurbel 20 ist außerdem eine Führung 21, in der die Schraubendruckfeder 16 aufgenommen ist, an deren Ende sich das Druckstück 15 befindet.

Wenn der Aktor 11 betätigt wird, wird das Schubgelenk 19 axial verschoben. Dementsprechend wird die Kurbel 20, deren Endabschnitt durch das Schubgelenk 19 geführt ist, gedreht. Wenn die Kupplung 18 von der in Fig. 3 gezeigten geschlossenen Position in die in Fig. 4 gezeigte geöffnete Position bewegt wird, wird die Kurbel 20 gegen den Uhrzeigersinn gedreht, sodass das Druckstück 15, das durch die Schraubendruckfeder 16 gegen die Laufbahn 5 des Druckelements 4 gedrückt wird, entlang der Laufbahn von der in Fig. 3 gezeigten Endlage in die in Fig. 4 gezeigte Endlage verschoben wird.

In Fig. 3 wirkt die durch die Schraubendruckfeder 16 erzeugte Axialkraft derart auf das Druckelement 4, dass dieses mit seiner Axialfläche 6 gegen das bewegliche Reibelement 7 gedrückt wird. Dieses liegt andererseits an dem festen Reibelement 10 an, wodurch der Reibschluss zwischen der ersten Welle 3 und der zweiten Welle 9 hergestellt wird.

Wenn die Kurbel 20 durch die Betätigung des Aktors 11 in die in Fig. 4 gezeigte Endlage gedreht ist, verschiebt die axiale Komponente der von der Schraubendruckfeder 16 erzeugten Kraft das Druckelement 4 in der Ansicht von Fig. 4 nach rechts, wodurch der Kraftschluss zwischen den beiden Wellen 3, 9 aufgehoben wird. Das aus der Kurbel 20 und dem Schubgelenk 19 bestehende Getriebe zeichnet sich durch einen einfachen Aufbau aus. Allerdings erfolgen das Öffnen und Schließen nichtlinear. Die Betätigungskräfte sind größer als bei dem zuvor beschriebenen ersten Ausführungsbeispiel.

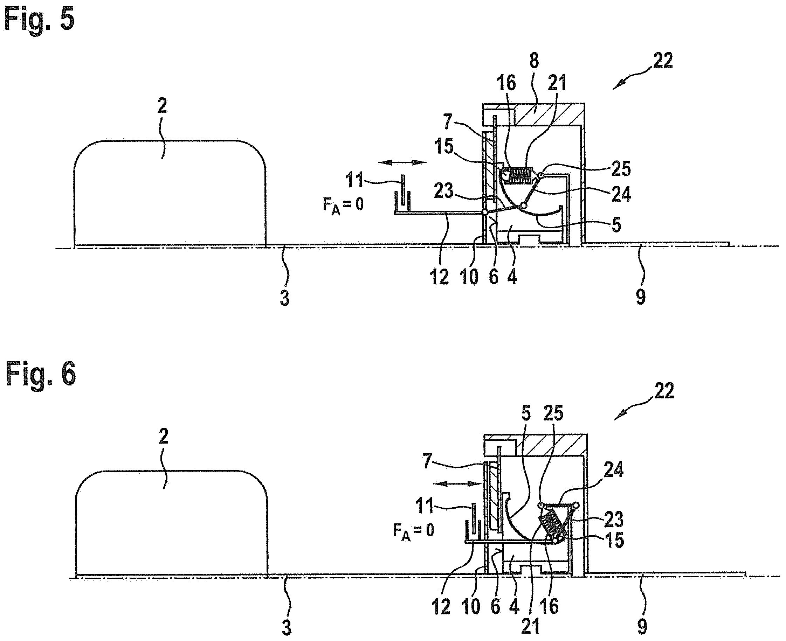

Die Fig. 5 und 6 zeigen ein drittes Ausführungsbeispiel einer Kupplung 22, wobei Fig. 5 den geschlossenen Zustand und Fig. 6 den geöffneten Zustand darstellt. Diejenigen Komponenten, die mit denjenigen des ersten Ausführungsbeispiels übereinstimmen, werden nicht nochmals im Detail erläutert. Für übereinstimmende Komponenten werden dieselben Bezugszeichen verwendet.

In Übereinstimmung mit dem ersten Ausführungsbeispiel umfasst die Kupplung 22 das Druckelement 4, das mit der ersten Welle 3 drehfest, jedoch axial verschiebbar verbunden ist. Das Druckelement 4 weist die als konkaves Kreissegment ausgebildete Laufbahn 5 auf. Eine erste Getriebekomponente ist als erste Koppelstange 23 ausgebildet und mit dem Schieber 12, der durch den Aktor 11 betätigbar ist, verbunden. Eine zweite Getriebekomponente ist als zweite Koppelstange 24 ausgebildet, die fest mit der Führung 21 verbunden ist, in der die Schraubendruckfeder 16 aufgenommen ist, an deren Ende sich das Druckstück 15 befindet. Wenn der Aktor 11 betätigt wird, werden die erste Koppelstange 23 und die zweite Koppelstange 24 durch den Schieber 12 verschoben und gedreht. Insbesondere wird die Führung 21 um ihren Drehpunkt 25 gedreht. Beim Übergang von dem in Fig. 5 gezeigten geschlossenen Zustand in den in Fig. 6 gezeigten geöffneten Zustand erfolgt die Drehung gegen den Uhrzeigersinn. Dabei wird das Druckstück 15, das durch die Schraubendruckfeder 16 gegen die Laufbahn 5 des Druckelements 4 gedrückt wird, entlang der Laufbahn von der in Fig. 5 gezeigten Endlage in die in Fig. 6 gezeigte Endlage verschoben.

In Fig. 5 wirkt die durch die Schraubendruckfeder 16 erzeugte Axialkraft derart auf das Druckelement 4, dass dieses mit seiner Axialfläche 6 gegen das bewegliche Reibelement 7 gedrückt wird. Dieses liegt andererseits an dem festen Reibelement 10 an, wodurch der Reibschluss zwischen der ersten Welle 3 und der zweiten Welle 9 gebildet wird.

Wenn die zweite Koppelstange 24 durch die Betätigung des Aktors in die in Fig. 6 gezeigte Endlage geschwenkt wird, verschiebt die axiale Komponente der von der Schraubendruckfeder 16 erzeugten Kraft das Druckelement 4 in der Ansicht von Fig. 6 nach rechts, wodurch der Reibschluss zwischen den beiden Wellen 3, 9 aufgehoben wird. Bei dem aus der ersten Koppelstange 23, der zweiten Koppelstange 24 und der Führung 21 bestehenden Koppelgetriebe sind die Kräfte gut abstimmbar.

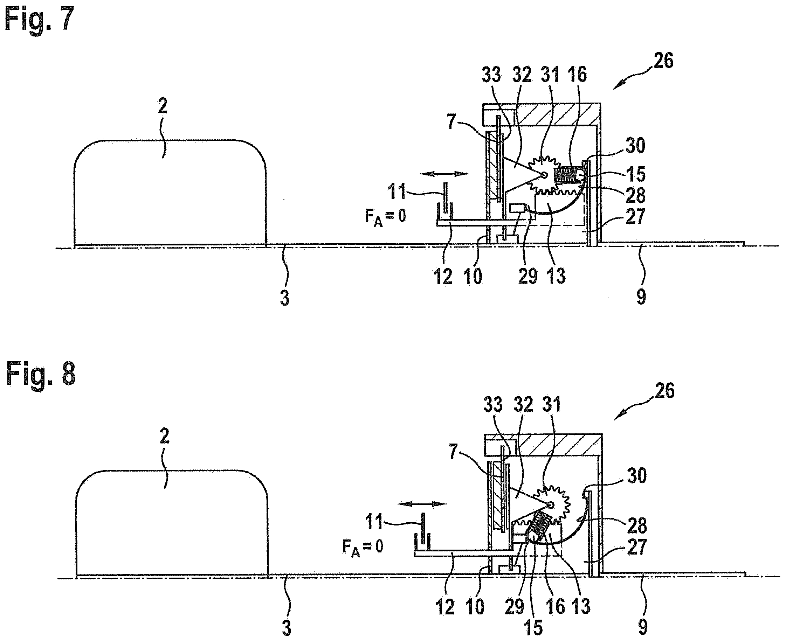

Die Fig. 7 und 8 zeigen ein viertes Ausführungsbeispiel einer Kupplung 26, wobei Fig. 7 den geschlossenen Zustand und Fig. 8 den geöffneten Zustand darstellt. Übereinstimmende Komponenten werden wiederum mit denselben Bezugszeichen wie in den vorangehenden Ausführungsbeispielen bezeichnet.

Auf der ersten Welle 3, die Bestandteil der elektrischen Maschine 2 ist, befindet sich ein Druckelement 27, das drehfest und - anders als in den vorangehenden Ausführungsbeispielen - auch in Axialrichtung fest auf der Welle 3 angeordnet ist. Das Druckelement 27 weist eine Laufbahn 28 auf, die als konkaves Kreissegment ausgebildet ist. An beiden Enden der Laufbahn 28 ist jeweils ein Anschlag 29, 30 angeordnet, der die Bewegung eines Druckstücks 15 entlang der Laufbahn 28 begrenzt.

Der Aktor 11 bewegt den Schieber 12, an dessen Ende sich die Zahnstange 13 befindet, die mit einem Zahnrad 31 kämmt. Das Zahnrad 31 ist an einer Halterung 32 drehbar gelagert. Eine Axialfläche 33 der Halterung 32 wird im geschlossenen Zustand gegen das bewegliche Reibelement 7 gedrückt, das andererseits an dem festen Reibelement 10 anliegt. In diesem in Fig. 7 gezeigten Zustand stützt sich die Schraubendruckfeder 16 mit dem Druckstück 15 einerseits an der Laufbahn 28 und andererseits an dem drehbar gelagerten Zahnrad 31 ab. Dementsprechend drückt die Schraubendruckfeder 16 über das Zahnrad 31 und die Halterung 32 die Axialfläche 33 gegen das bewegliche Reibelement 7, wodurch der Reibschluss zwischen der ersten Welle 3 und der zweiten Welle 9 hergestellt wird.

Wenn der Aktor 11 ausgehend von der in Fig. 7 gezeigten Position betätigt wird, d. h. in der Ansicht der Fig. 7 nach links, verschiebt der Schieber 12 die Zahnstange 13 axial nach links, wodurch das Zahnrad 31 sich auf der Zahnstange 13 abwälzt. Während der Drehung wird das Druckstück 15 entlang der Laufbahn 28 im Uhrzeigersinn verschoben, bis es den linken Anschlag 29 erreicht. Das Zahnrad 31, die Halterung 32 sowie die Axialfläche 33 sind auf der ersten Welle 3 der Kupplung 26 axial verschiebbar jedoch drehfest gelagert, diese Komponenten werden während des Öffnungsvorgangs axial verschoben, in der Ansicht der Fig. 7 und 8 nach rechts. Dadurch entfernt sich die Axialfläche 33 von dem beweglichen Reibelement 7 und die Kupplung 26 wird geöffnet. Während der Öffnungsbewegung durchläuft das Druckstück 15 eine Neutrallage, in der keine Axialkraft ausgeübt wird. Wenn die in Fig. 8 gezeigte Endlage erreicht ist, übt die Schraubendruckfeder 16 jedoch eine Axialkraft auf das Zahnrad 31, die Halterung 32 und die Axialfläche 33 aus, sodass diese Komponenten von dem beweglichen Reibelement 7 weg bewegt werden und der Kraftfluss zwischen den beiden Wellen 3, 9 aufgehoben wird. Die Axialfläche 33 kann auch als bewegliches Reibelement ausgebildet sein.

Ähnlich wie in dem ersten Ausführungsbeispiel liegt auch in diesem vierten Ausführungsbeispiel ein geschlossener Lastpfad vor, sodass die durch die Schraubendruckfeder 16 erzeugte Druckkraft nicht als Axialkraft auf die Wellenlagerung wirkt. Stattdessen stützt sich die Schraubendruckfeder 16 in dem jeweiligen Übertragungsmechanismus ab. Nur bei Betätigung der Kupplung, d. h. beim Öffnen oder Schließen, wirkt kurzzeitig ein Teil der Federkraft auf die Wellenlagerung. Da auf die Wellenlagerung keine Axialkraft wirkt, erhöht sich deren Lebensdauer und der Energieverlust in der Lagerung verringert sich.

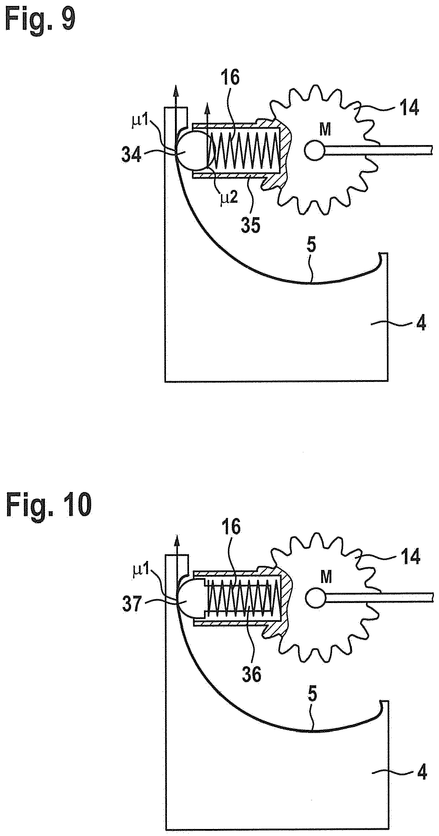

Die Fig. 9, 10 und 11 zeigen jeweils ein Detail einer Kupplung im Bereich des die Laufbahn 5 aufweisenden Druckelements 4 und des Zahnrads 14.

In Fig. 9 ist das Druckstück als Kugel 34 ausgebildet, das durch die Schraubendruckfeder 16, die sich an dem Zahnrad 14 abstützt, beaufschlagt wird. Die Schraubendruckfeder 16 ist in einer Führung 35 aufgenommen.

In Fig. 10 ist das Druckstück als Zylinder 36 ausgebildet, der ein kugelförmiges Ende 37 aufweist. Der Zylinder 36 und das kugelförmige Ende 37 bilden einen Stempel mit einer umlaufenden axialen Ringfläche. Die Schraubendruckfeder 16 umgibt den Zylinder 36 und stützt sich einerseits an der umlaufenden axialen Ringfläche und andererseits an dem Zahnrad 14 ab.

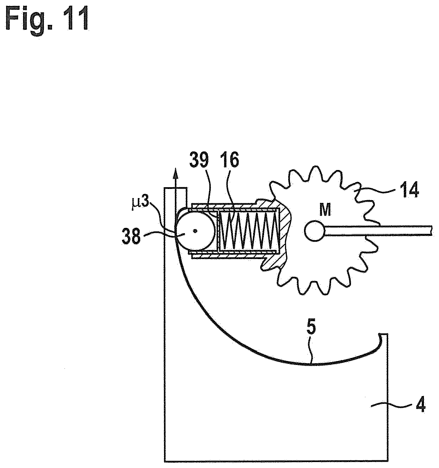

In Fig. 11 ist das Druckstück als Rolle 38 ausgebildet, während die Druckfeder sich anders als in dem in Fig. 9 gezeigten Ausführungsbeispiel nicht direkt an der Rolle, sondern an einer Axialfläche 39 einer Druckhülse abstützt. Diese Druckhülse lagert die um ihre Längsachse drehbare Rolle 38. Dementsprechend rollt bzw. wälzt sich die Rolle 38 auf der Laufbahn 5 ab. Durch diese Ausgestaltung kann die Reibung näherungsweise um eine Größenordnung im Vergleich zu den in den Fig. 9 und 10 gezeigten Ausführungsbeispielen verringert werden.

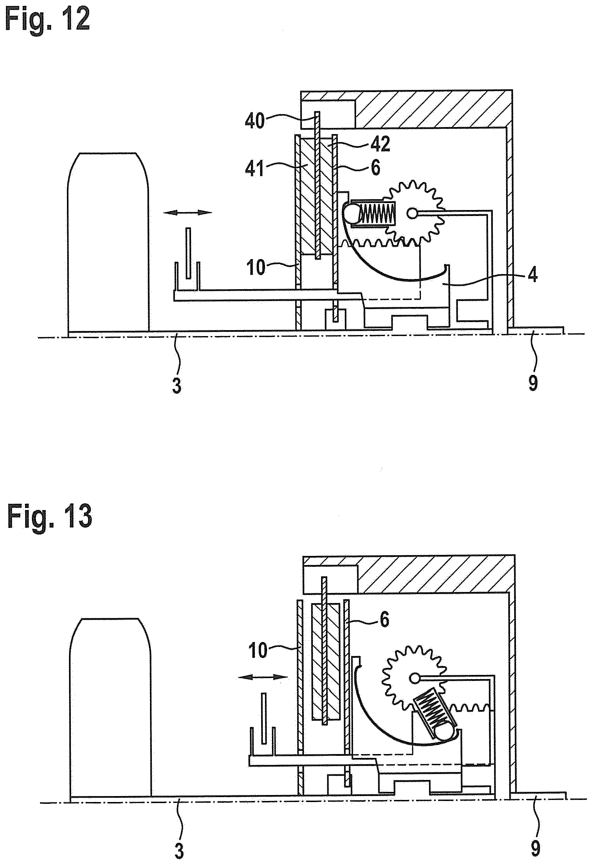

Die Fig. 12 und 13 zeigen ein Ausführungsbeispiel einer Kupplung mit zwei Reibpaarungen, das ähnlich wie das in den Fig. 1 und 2 gezeigte erste Ausführungsbeispiel aufgebaut ist. Auf eine nochmalige Erläuterung übereinstimmender Komponenten wird daher an dieser Stelle verzichtet.

Ein bewegliches Reibelement 40, dass mit der zweiten Welle 9 verbunden ist, weist an beiden Seiten Reibbeläge 41, 42 auf. Im geschlossenen Zustand der Kupplung, der in Fig. 12 gezeigt ist, ist berührt der Reibbelag 42 die Axialfläche 6 des Druckelements 4. Gleichzeitig berührt der Reibbelag 41 das mit der ersten Welle 3 verbundene feste Reibelement 10. In dem in Fig. 13 gezeigten geöffneten Zustand sind beide Reibbeläge 41, 42 von den jeweiligen Gegenflächen, d. h. von der Axialfläche 6 und dem festen Reibelement 10 beabstandet. Varianten der Kupplung können Federn zum Lüften aufweisen.

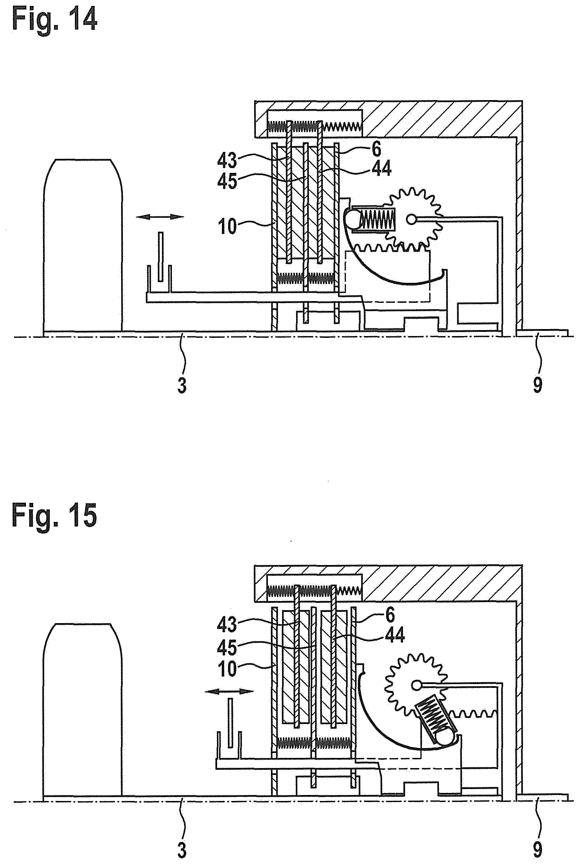

Die Fig. 14 und 15 zeigen ein Ausführungsbeispiel, das ähnlich wie das in den Fig. 12 und 13 dargestellte Ausführungsbeispiel aufgebaut ist. In diesem Ausführungsbeispiel weist die Kupplung zwei bewegliche Reibelemente 43, 44 auf, die axial verschiebbar und optional federnd gelagert sind. Jedes Reibelement 43, 44 weist auf beiden Seiten Reibbeläge auf, so dass insgesamt vier Reibbeläge vorhanden sind. Der in Fig. 14 am weitesten links angeordnete Reibbelag liegt im geschlossenen Zustand an dem festen Reibelement 10 an, der in Fig. 14 am weitesten rechts angeordnete Reibbelag liegt an der Axialfläche 6 an. In der Mitte, d. h. zwischen den beiden inneren Reibbelägen, befindet sich ein mit der ersten Welle 3 verbundenes Reibelement 45. Zwischen dem festen Reibelement 10 und dem Reibelement 45 sowie zwischen dem Reibelement 45 und der Axialfläche 6 ist jeweils optional eine Lüftfeder angeordnet, die bei geöffneter Kupplung sicherstellt, dass sich die mit der ersten Welle 3 bzw. mit der zweiten Welle 9 verbundenen Komponenten nicht berühren, wodurch Reibungsverluste vermieden werden.

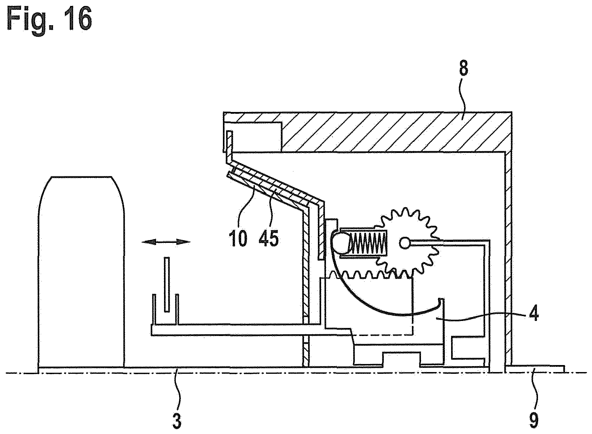

Fig. 16 zeigt ein Ausführungsbeispiel einer Kupplung, die ähnlich wie die in den Fig. 1 und 2 gezeigte Kupplung aufgebaut ist. Allerdings ist das bewegliche Reibelement 45 dort konisch ausgebildet. Durch das konisch ausgebildete bewegliche Reibelement 45 erhöht sich die Flächenpressung zwischen den mit den beiden Wellen 3, 9 verbundenen Komponenten, sodass ein höheres Drehmoment im Vergleich zu einer planen Kupplung übertragen werden kann. Das konische, bewegliche Reibelement 45 liegt bei geschlossener Kupplung an einem ebenfalls konisch ausgebildeten festen Reibelement 10 an. Das bewegliche Reibelement 45 ist an seinem linken Ende, am äußeren Umfang in dem mit der Welle 9 verbundenen Gehäuse 8 axial verschiebbar jedoch drehfest gelagert. Das andere Ende wird durch das Druckelement 4 mittels dessen Andruckfläche beaufschlagt. Im geöffneten Zustand liegt eine Drehzahldifferenz zwischen dem mit der zweiten Welle verbundenen Reibelement 45 und dem mit der ersten Welle 3 verbundenen Reibelement 10 und Druckelement 4 vor.

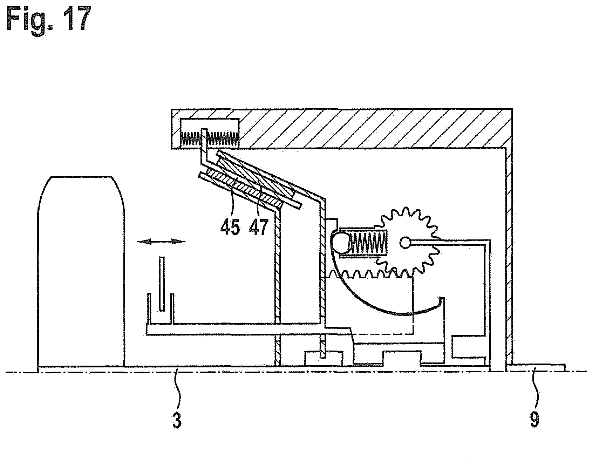

Fig. 17 zeigt ein ähnliches Ausführungsbeispiel einer Kupplung wie Fig. 16, wobei neben dem konischen beweglichen Reibelement 45 ein weiteres konisches bewegliches Reibelement 47 vorhanden ist. Durch das zweite Reibelement 47 kann ein höheres Drehmoment im Vergleich zu der Kupplung des Ausführungsbeispiels von Fig. 16 übertragen werden. In ähnlicher Weise können auch Kupplungen mit drei oder vier parallel angeordneten konischen Reibelementen gebildet werden.

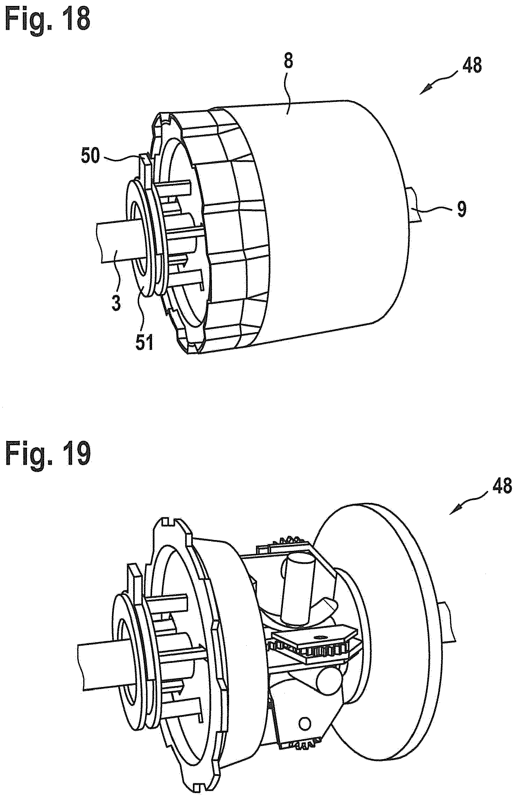

Fig. 18 ist eine perspektivische Ansicht und zeigt ein Ausführungsbeispiel einer Anordnung, umfassend eine erste Welle 3, eine zweite Welle 9 und eine dazwischen angeordnete Kupplung 48 mit einem Gehäuse 8. Das Schalten der Kupplung 48 erfolgt mittels einer nur teilweise dargestellten Schaltgabel 50, die in eine Nut eines Schiebers 51 eingreift.

Fig. 19 zeigt die Anordnung von Fig. 18 mit der Kupplung 48 ohne das Gehäuse 8. In diesem Ausführungsbeispiel sind fünf über den Umfang verteilte Federanordnungen mit Druckstücken vorhanden. Die einzelnen Federanordnungen sind gleichmäßig über den Umfang verteilt, d.h. im Abstand von 72°.

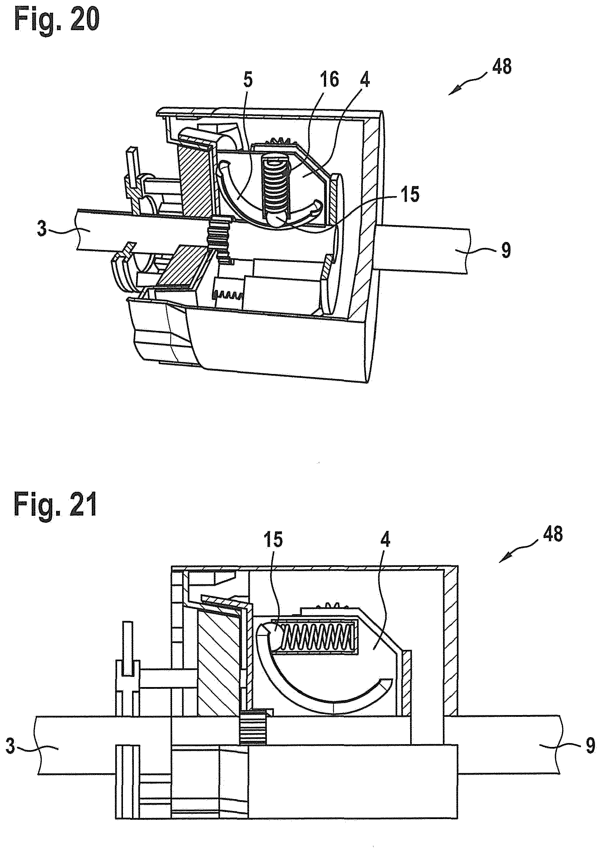

Fig. 20 ist eine teilweise geschnittene Ansicht der in Fig. 19 gezeigten Anordnung mit der Kupplung 48. Man erkennt dort insbesondere die erste Welle 3, die zweite Welle 9, das durch die Schraubendruckfeder 16 beaufschlagte Druckstück 15 sowie die Laufbahn 5.

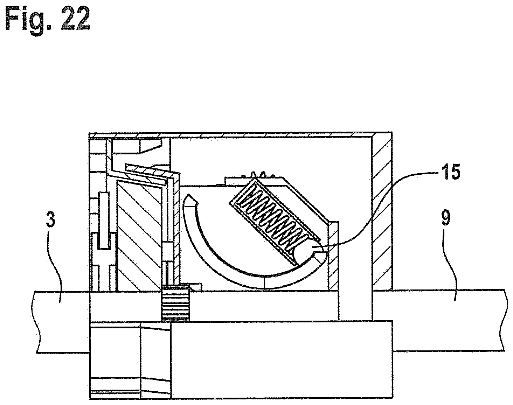

Die Fig. 21 und 22 sind teilweise geschnittene Ansichten der Anordnung mit der Kupplung 48, wobei Fig. 21 die Kupplung im geschlossenen Zustand und Fig. 22 die Kupplung im geöffneten Zustand zeigt. Das Druckstück 15 kann durch Schalten der Kupplung 48 von einer Endlage in die andere Endlage gedreht werden, wobei das Druckelement 4 axial entlang der Welle 3 verschoben wird. Fig. 21 zeigt den Zustand, wenn Reibkontakt hergestellt und die Kupplung geschlossen ist. Andererseits zeigt Fig. 22 den Zustand, wenn kein Reibkontakt vorliegt und die Kupplung 48 geöffnet ist, sodass kein Drehmoment übertragen werden kann.

Die Anordnung eignet sich besonders gut für den Einbau in ein Fahrzeug, insbesondere ein Elektrofahrzeug oder ein Hybridfahrzeug, umfassend zwei elektrische Maschinen, die entweder als Motor oder als Generator betreibbar sind und eine dazwischen angeordnete Kupplung der beschriebenen Art.

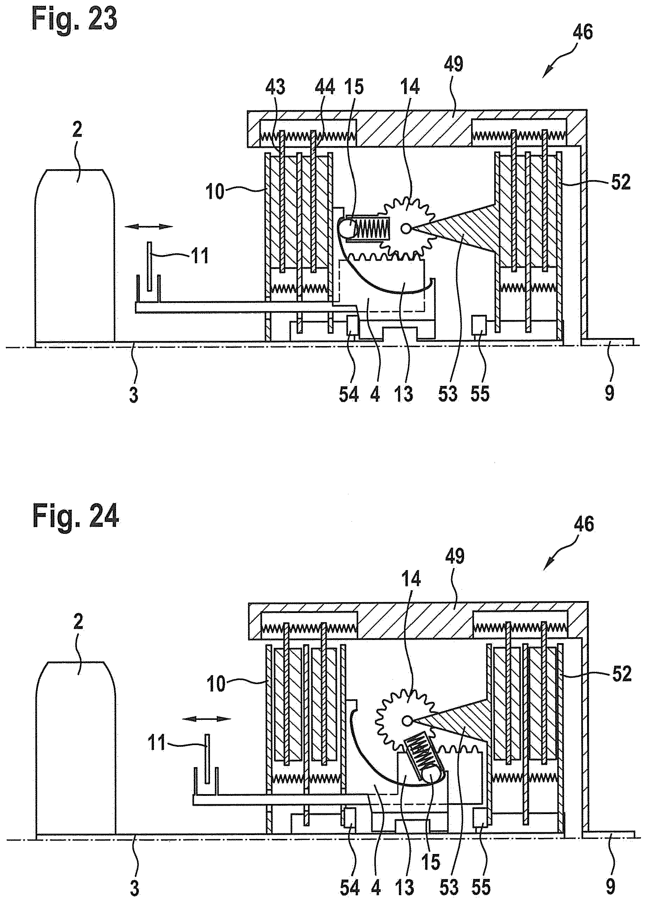

Die Fig. 23 und 24 zeigen ein weiteres Ausführungsbeispiel einer Kupplung 46 mit einem Gehäuse 49, die ähnlich wie die in den Fig. 14 und 15 gezeigte Kupplung aufgebaut ist. Allerdings weist die in den Fig. 23 und 24 gezeigte Kupplung 46 zwei Paare von Reibpaarungen auf, wobei jeweils ein Teil der Reibpaarungen auf einer Seite des Zahnrads 14 und der Zahnstange 13 angeordnet ist, d.h. es sind zwei Stapel von Reibpaarungen gebildet. Es ist vorteilhaft, wenn auf jeder Seite des Zahnrads 14 jeweils die Hälfte der Reibpaarungen angeordnet ist.

Fig. 23 zeigt den geschlossenen Zustand der Kupplung 46, die sowohl auf der linken Seite als auch auf der rechten Seite zwei Paare von Reibelementen 43, 44 mit je zwei Reibbelägen aufweist. An der in Fig. 23 linken Seite und an der entgegengesetzten rechten Außenseite liegen die Reibbeläge an mit der ersten Welle 3 fest verbundenen Reibelementen 10, 52 an. In Fig. 23 erkennt man, dass die beiden Paare der Reibelemente 43, 44 mit der zweiten Welle 9 verbunden und axial elastisch gelagert sind. Eine Halterung 53 bildet die Lagerung für das Zahnrad 14. In dem geschlossenen Zustand, d. h. wenn das Druckstück 15 sich in der in Fig. 23 gezeigten linken, oberen Position befindet, werden sowohl die linken als auch die rechten Reibbeläge an die entsprechenden Reibelemente bzw. Gegenflächen gedrückt, sodass ein Drehmoment übertragen werden kann.

Wenn der Aktor 11 betätigt und ausgehend von dem in Fig. 23 gezeigten Zustand nach rechts bewegt wird, wird das Zahnrad 14 gedreht und gleichzeitig nach links verschoben, bis das Druckstück 15 an dem rechten Anschlag des Druckelements 4 anliegt. In diesem Zustand ist die Kupplung 46 geöffnet, d. h. die Reibbeläge sind von ihren jeweiligen Reibelementen entfernt.

In den Fig. 23 und 24 erkennt man, dass an der Welle 3 ein erster (linker) Anschlag 54 und ein zweiter (rechter) Anschlag 55 vorhanden sind. Die beiden Anschläge 54, 55 dienen zur Begrenzung des Wegs des Druckelements 4 in Axialrichtung relativ zu der Welle 3.

Der Vorteil des in den Fig. 23 und 24 gezeigten Ausführungsbeispiels mit zwei Stapeln von Reibpaarungen ist darin zu sehen, dass das nutzbare Moment sich erhöht und das Losreißen bei Überlast besser eingestellt werden kann. Dadurch wird die durch Reibungsverluste verursachte Abnahme der axialen Anpresskraft kompensiert, die bei einem einzigen Stapel auftreten würde.

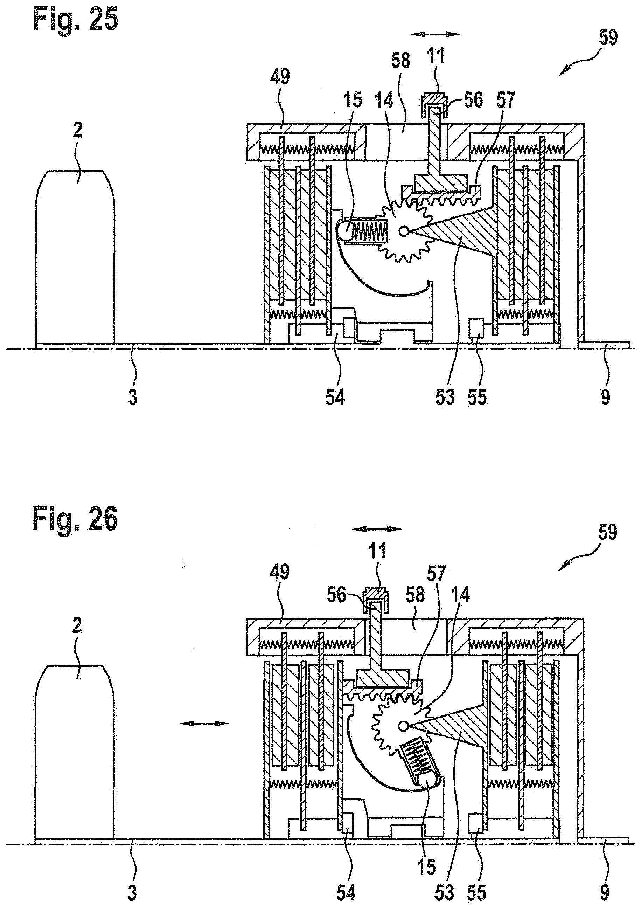

Die Fig. 25 und 26 zeigen ein weiteres Ausführungsbeispiel einer Kupplung 59 mit zwei Stapeln von Reibpaarungen. Fig. 25 zeigt die Kupplung 59 im geschlossenen Zustand, in Fig. 26 ist die Kupplung 59 geöffnet dargestellt. Auf eine nochmalige Beschreibung derjenigen Komponenten, die mit denjenigen des vorangehenden Ausführungsbeispiels übereinstimmen, wird an dieser Stelle verzichtet.

Anders als in dem vorangehenden Ausführungsbeispiel verschiebt der Aktor ein Betätigungselement 56, das mit der zweiten Welle 9 rotiert. Das Betätigungselement 56 treibt die Zahnstange 57 an, die wiederum mit der ersten Welle 3 rotiert. Das Betätigungselement 56 durchsetzt eine Öffnung 58eines Gehäuses 49, das mit der zweiten Welle 9 verbunden ist. Bei einer Betätigung des Betätigungselements 56, durch einen Aktor wie beispielsweise eine Schaltmuffe, wird das Betätigungselement 56 axial verschoben und verschiebt die Zahnstange 57, die mit dem Zahnrad 14 kämmt und das Druckstück 15, bis die in Fig. 26 gezeigte Position erreicht ist. Das Druckelement 4 ist dadurch in der Ansicht von Fig. 26 nach rechts verschoben worden, sodass die Reibpaarungen voneinander getrennt worden sind und die Kupplung geöffnet worden ist. Die Zahnstange 57 kann beispielsweise auch als Hülse mit Zahnrillen auf der Innenseite ausgeführt sein. Der Vorteil dieser Variante ist, dass eine aufwändige Durchführung der mit dem Betätigungselement 56 verbundenen Komponenten durch Reibelemente entfällt. Zudem wird der zur Verfügung stehende Bauraum besser ausgenutzt und die Fertigung wird vereinfacht.

### Bezugszeichenliste

- 1: Kupplung
- 2: elektrische Maschine
- 3: erste Welle
- 4: Druckelement
- 5: Laufbahn
- 6: Axialfläche
- 7: Reibelement
- 8: Gehäuse
- 9: zweite Welle
- 10: Reibelement
- 11: Aktor
- 12: Schieber
- 13: Zahnstange
- 14: Zahnrad
- 15: Druckstück
- 16: Schraubendruckfeder
- 17: Fläche
- 18: Kupplung
- 19: Schubgelenk
- 20: Kurbel
- 21: Führung
- 22: Kupplung
- 23: erste Koppelstange
- 24: zweite Koppelstange
- 25: Drehpunkt
- 26: Kupplung
- 27: Druckelement
- 28: Laufbahn
- 29: Anschlag
- 30: Anschlag
- 31: Zahnrad
- 32: Halterung
- 33: Axialfläche
- 34: Kugel
- 35: Führung
- 36: Zylinder
- 37: Ende
- 38: Rolle
- 39: Axialfläche
- 40: Reibelement
- 41: Reibbelag
- 42: Reibbelag
- 43: Reibelement
- 44: Reibelement
- 45: Reibelement
- 46: Kupplung
- 47: Reibelement
- 48: Kupplung
- 49: Gehäuse
- 50: Schaltgabel
- 51: Schieber
- 52: Reibelement
- 53: Halterung
- 54: Anschlag
- 55: Anschlag
- 56: Betätigungselement
- 57: Zahnstange
- 58: Öffnung
- 59: Kupplung

## Patentansprüche

1. Kupplung (1, 18, 22, 26, 46, 48, 59) zum wahlweisen Verbinden einer ersten Welle (3) mit einer zweiten Welle (9), wobei die Kupplung (1, 18, 22, 26, 46, 48, 59) dazu ausgebildet ist, ohne Aufbringen einer äußeren Kraft entweder einen geschlossenen Zustand, in dem eine kraftschlüssige Verbindung zwischen den beiden Wellen (3, 9) hergestellt ist, oder einen geöffneten Zustand, in dem die beiden Wellen (3, 9) voneinander getrennt sind, aufrechtzuerhalten,
wobei die Kupplung (1, 18, 22, 26, 46, 48, 59) mittels eines Aktors (11) von dem geschlossenen Zustand in den geöffneten Zustand und umgekehrt schaltbar ist, wobei die Kupplung (1, 18, 22, 26, 46, 48, 59) ein Druckstück (15) aufweist, das mittels des Aktors (11) entlang einer Laufbahn (5) bewegbar ist und auf ein drehfest mit der ersten Welle (3) verbundenes und axial verschiebbares Druckelement (4) eine Kraft ausübt, sodass das Druckelement (4) entweder in dem geschlossenen Zustand gegen ein mit der zweiten Welle (9) verbundenes Reibelement (7) angedrückt wird oder in dem geöffneten Zustand von dem Reibelement (7) beabstandet ist,
**dadurch gekennzeichnet, dass**
der Aktor (11) zum Verschieben einer ersten Getriebekomponente ausgebildet ist, die derart mit einer zweiten Getriebekomponente gekoppelt ist, dass durch Verschieben der ersten Getriebekomponente das Druckstück (15) durch die zweite Getriebekomponente entlang der Laufbahn (5) bewegbar ist, um die Kupplung (1, 18, 22, 26, 46, 48, 59) von dem geschlossenen Zustand in den geöffneten Zustand und umgekehrt zu schalten.

2. Kupplung nach Anspruch 1,
wobei die erste Getriebekomponente als Zahnstange (13) und die zweite Getriebekomponente als Zahnrad (14) oder Zahnradsegment ausgebildet ist.

3. Kupplung nach Anspruch 1,
wobei die erste Getriebekomponente als Schubgelenk (19) und die zweite Getriebekomponente als Kurbel (20) ausgebildet ist.

4. Kupplung nach Anspruch 1,
wobei die erste Getriebekomponente und die zweite Getriebekomponente als Bestandteile eines Koppelgetriebes ausgebildet sind.

5. Kupplung nach einem der vorangehenden Ansprüche,
wobei das Druckstück (15) durch die Kraft eines Federelements beaufschlagt ist, das zwischen der zweiten Getriebekomponente und dem Druckstück (15) angeordnet ist und bei geschlossener Kupplung das Druckelement (4) gegen ein mit der zweiten Welle (9) verbundenes Bauteil anpresst.

6. Kupplung nach einem der vorangehenden Ansprüche,
wobei die Laufbahn (5) als konkaves Kreissegment oder als Kombination mehrerer Kreissegmente oder als konkave Rinne oder als rechteckige Rinne ausgebildet ist.

7. Kupplung nach einem der vorangehenden Ansprüche,
wobei das Druckstück (15) als Kugel, als Rolle, als Zylinder mit einem Ende, das kugelförmig, als Torus, als Torussegment, als Hohlzylindersegment oder als Zylinderabschnitt ausgebildet ist.

8. Kupplung nach einem der vorangehenden Ansprüche,
wobei mehrere Reibflächen vorgesehen sind, insbesondere zwei, drei oder vier Reibflächen oder vier, sechs oder acht Reibflächen bei beidseitiger Anordnung.

9. Kupplung nach einem der vorangehenden Ansprüche,
wobei eine Reibfläche als Scheibe, Ring oder als Konus ausgebildet ist.

10. Kupplung nach einem der vorangehenden Ansprüche,
wobei sie wenigstens eine Lüftfeder zum Erzeugen eines Lüftspiels in dem geöffneten Zustand aufweist.

11. Kupplung nach einem der vorangehenden Ansprüche,
wobei mehrere über den Umfang verteilt angeordnete Druckstücke (15) vorhanden sind, die jeweils mittels des Aktors (11) entlang einer Laufbahn (5) bewegbar sind und ein drehfest mit der ersten Welle (3) verbundenes Druckelement (4) beaufschlagen.

12. Anordnung, umfassend eine erste Welle (3) und eine zweite Welle (9) und eine dazwischen angeordnete Kupplung (1, 18, 22, 26, 46, 48, 59) nach einem der Ansprüche 1 bis 11.

13. Fahrzeug, insbesondere Elektrofahrzeug oder Hybridfahrzeug, umfassend wenigstens eine elektrische Maschine (2), die entweder als Motor oder als Generator betreibbar ist und/oder eine Brennkraftmaschine, und eine Kupplung (1, 18, 22, 26, 46, 48, 59) nach einem der Ansprüche 1 bis 11.

## Claims

1. Clutch (1, 18, 22, 26, 46, 48, 59) for selectively connecting a first shaft (3) to a second shaft (9), wherein the clutch (1, 18, 22, 26, 46, 48, 59) is configured to maintain either a closed state, in which a non-positive connection between the two shafts (3, 9) is produced, or an open state, in which the two shafts (3, 9) are disconnected from one another, without application of an external force,
wherein the clutch (1, 18, 22, 26, 46, 48, 59) can be shifted from the closed state to the open state and vice versa by means of an actuator (11),
wherein the clutch (1, 18, 22, 26, 46, 48, 59) has a pressure piece (15) which can be moved along a track (5) by means of the actuator (11) and which exerts a force on an axially displaceable pressure element (4) which is connected to the first shaft (3) in a rotationally fixed manner, such that the pressure element (4) is either pressed against a friction element (7), which is connected to the second shaft (9), in the closed state or is spaced apart from the friction element (7) in the open state,
**characterized in that**
the actuator (11) is configured to displace a first transmission component which is coupled to a second transmission component in such a way that displacement of the first transmission component makes it possible for the pressure piece (15) to be moved along the track (5) by the second transmission component, in order to shift the clutch (1, 18, 22, 26, 46, 48, 59) from the closed state to the open state and vice versa.

2. Clutch according to Claim 1,
wherein the first transmission component is configured as a rack (13) and the second transmission component is configured as a gearwheel (14) or gearwheel segment.

3. Clutch according to Claim 1,
wherein the first transmission component is configured as a prismatic joint (19) and the second transmission component is configured as a crank (20).

4. Clutch according to Claim 1,
wherein the first transmission component and the second transmission component are configured as constituent parts of a coupling mechanism.

5. Clutch according to one of the preceding claims,
wherein the pressure piece (15) is acted on by the force of a spring element which is arranged between the second transmission component and the pressure piece (15) and which, when the clutch is closed, presses the pressure element (4) against a component which is connected to the second shaft (9).

6. Clutch according to one of the preceding claims,
wherein the track (5) is configured as a concave circle segment or as a combination of a plurality of circle segments or as a concave channel or as a rectangular channel.

7. Clutch according to one of the preceding claims,
wherein the pressure piece (15) is configured as a ball, as a roller, as a cylinder with an end in the shape of a ball, as a torus, as a torus segment, as a hollow cylinder segment or as a cylinder portion.

8. Clutch according to one of the preceding claims,
wherein a plurality of friction surfaces are provided, in particular two, three or four friction surfaces, or four, six or eight friction surfaces in the case of a double-sided arrangement.

9. Clutch according to one of the preceding claims,
wherein a friction surface is configured as a disc, ring or as a cone.

10. Clutch according to one of the preceding claims,
wherein it has at least one air spring for generating an air gap in the open state.

11. Clutch according to one of the preceding claims,
wherein a plurality of pressure pieces (15) which are arranged distributed around the periphery are present, each of which can be moved along a track (5) by means of the actuator (11) and act on a pressure element (4) which is connected to the first shaft (3) in a rotationally fixed manner.

12. Arrangement comprising a first shaft (3) and a second shaft (9) and a clutch (1, 18, 22, 26, 46, 48, 59) according to one of Claims 1 to 11 which is arranged therebetween.

13. Vehicle, in particular electric vehicle or hybrid vehicle, comprising at least one electric machine (2), which can be operated either as a motor or as a generator, and/or an internal combustion engine, and a clutch (1, 18, 22, 26, 46, 48, 59) according to one of Claims 1 to 11.

## Revendications

1. Accouplement (1, 18, 22, 26, 46, 48, 59) pour relier sélectivement un premier arbre (3) à un deuxième arbre (9), l'accouplement (1, 18, 22, 26, 46, 48, 59) étant configuré pour maintenir, sans application d'une force extérieure, soit un état fermé dans lequel une liaison par adhérence est établie entre les deux arbres (3, 9), soit un état ouvert dans lequel les deux arbres (3, 9) sont séparés l'un de l'autre,
l'accouplement (1, 18, 22, 26, 46, 48, 59) pouvant être commuté au moyen d'un actionneur (11) de l'état fermé à l'état ouvert et inversement, l'accouplement (1, 18, 22, 26, 46, 48, 59) présentant une pièce de pression (15) qui peut être déplacée au moyen de l'actionneur (11) le long d'une voie de roulement (5) et qui exerce une force sur un élément de pression (4) relié de manière solidaire en rotation au premier arbre (3) et pouvant être coulissé axialement, de telle sorte que l'élément de pression (4) est soit pressé contre un élément de friction (7) relié au deuxième arbre (9) à l'état fermé, soit espacé de l'élément de friction (7) à l'état ouvert,
**caractérisé en ce que**
l'actionneur (11) est configuré pour faire coulisser un premier composant de transmission qui est couplé à un deuxième composant de transmission de telle sorte qu'en faisant coulisser le premier composant de transmission, la pièce de pression (15) peut être déplacée le long de la voie de roulement (5) par le deuxième composant de transmission afin de commuter l'accouplement (1, 18, 22, 26, 46, 48, 59) de l'état fermé à l'état ouvert et inversement.

2. Accouplement selon la revendication 1,
dans lequel le premier composant de transmission est une crémaillère (13) et le deuxième composant de transmission est une roue dentée (14) ou un segment de roue dentée.

3. Accouplement selon la revendication 1,
dans lequel le premier composant de transmission est configuré sous forme d'articulation de poussée (19) et le deuxième composant de transmission est configuré sous forme de manivelle (20).

4. Accouplement selon la revendication 1 dans lequel le premier composant de transmission et le deuxième composant de transmission sont configurés sous forme de constituants d'une transmission de couplage.

5. Accouplement selon l'une quelconque des revendications précédentes,
dans lequel la pièce de pression (15) est sollicitée par la force d'un élément élastique qui est agencé entre le deuxième composant de transmission et la pièce de pression (15) et qui, lorsque l'accouplement est fermé, presse l'élément de pression (4) contre un composant relié au deuxième arbre (9).

6. Accouplement selon l'une quelconque des revendications précédentes,
dans lequel la voie de roulement (5) est configurée sous forme de segment de cercle concave ou sous forme de combinaison de plusieurs segments de cercle ou sous forme de gouttière concave ou sous forme de gouttière rectangulaire.

7. Accouplement selon l'une quelconque des revendications précédentes,
dans lequel la pièce de pression (15) est configurée sous forme de sphère, sous forme de rouleau, sous forme de cylindre dont une extrémité est sphérique, sous forme de tore, sous forme de segment de tore, sous forme de segment de cylindre creux ou sous forme de section de cylindre.

8. Accouplement selon l'une quelconque des revendications précédentes,
dans lequel plusieurs surfaces de friction sont prévues, notamment deux, trois ou quatre surfaces de friction ou quatre, six ou huit surfaces de friction dans le cas d'un agencement des deux côtés.

9. Accouplement selon l'une quelconque des revendications précédentes,
dans lequel une surface de friction est configurée sous forme de disque, d'anneau ou de cône.

10. Accouplement selon l'une quelconque des revendications précédentes,
présentant au moins un ressort d'aération pour créer un jeu d'aération à l'état ouvert.

11. Accouplement selon l'une quelconque des revendications précédentes,
dans lequel plusieurs pièces de pression (15) agencées en étant réparties sur la périphérie sont présentes, qui peuvent chacune être déplacées le long d'une voie de roulement (5) au moyen de l'actionneur (11) et qui sollicitent un élément de pression (4) relié de manière solidaire en rotation au premier arbre (3).

12. Agencement, comprenant un premier arbre (3) et un deuxième arbre (9) et un accouplement (1, 18, 22, 26, 46, 48, 59) selon l'une quelconque des revendications 1 à 11 agencé entre eux.

13. Véhicule, notamment véhicule électrique ou véhicule hybride, comprenant au moins une machine électrique (2) pouvant fonctionner soit en tant que moteur, soit en tant que générateur et/ou un moteur à combustion interne, et un accouplement (1, 18, 22, 26, 46, 48, 59) selon l'une quelconque des revendications 1 à 11.
